# EUROPEAN PATENT APPLICATION

(11) **EP 0 778 692 A2**
(43) Date of publication of application: **11.06.1997**
(21) Application number: 96114497.9
(22) Date of filing: 10.09.1996
(51) Int. Cl.: H04N 1/00

(54) **Composite image forming system**

(30) Priority: 08.12.1995 JP 320537/95
(71) Applicant: KABUSHIKI KAISHA TOSHIBA, Kawasaki-shi (JP)
(72) Inventor: Taniguchi, Masahiko, c/o K.K. Toshiba, Tokyo 105 (JP); Nosaki, Takefumi, c/o K.K. Toshiba, Tokyo 105 (JP)
(74) Representative: Blumbach, Kramer & Partner

(57) **Abstract**

A composite image forming system comprising an image forming unit (100) and a computer (110) is disclosed. The image data stored in a page memory (12) of the image forming unit (100) and in an external memory unit (120) of the computer (110) are processed as data blocks with a header added thereto. The data blocks and the operating conditions of each device of the composite image forming unit (100) are managed by a data allocation status block (42). For example, the copying operation in which the image data on an original read by a scanner (4) is formed and output as an image in a printer (5) can be performed concurrently with the operation of transmitting the image data produced by the computer (110) through a facsimile (11). Also, the computer (110) can control the image forming unit (100) without interfering with the control operation from a control panel (3).

## Description

The present invention relates to a composite image forming system, in which a composite image forming unit including a plurality of devices such as a scanner, a printer and a facsimile is connected with a computer, and each device can be controlled from the computer.

In recent years, the copier has more and more become composite. A composite image forming unit, which has the transmission/receiving function of a facsimile in addition to the duplicating function, has been developed. In some copiers, the functions of reading (scanning) and printing an original, which were once incorporated with each other, have recently been performed independently of each other. The functions of scanner and printer thus are offered separately. These functions have so far been controlled manually by the user from a control panel attached to the copier proper. In the environment surrounding the computer, on the other hand, various networks including LAN have developed to such an extent that some copiers can now be connected to a network for remote operation.

In spite of the increasingly composite configuration of the conventional composite image forming units, however, the simultaneous or concurrent operation of the various functions of scanner, printer and facsimile has yet to be guaranteed. As long as a given function is working, therefore, other functions fail to operate inconveniently.

The object of the present invention is to provide a composite image forming system in which various devices such as a scanner, a printer and a facsimile included in a composite image forming unit can be remotely controlled from a computer connected with the composite image forming unit. Another object of the invention is to provide a composite image forming system in which the remote operation by the computer does not interfere with the direct operation of the composite image forming unit through a control panel by the user.

Still another object of the invention is to provide a composite image forming system that guarantees the concurrent operation of the various functions of the composite image forming unit.

According to a first aspect of the invention, there is provided a composite image forming system comprising a composite image forming unit and a computer such as a personal computer. The image data stored in an external memory of the computer and the page memory of the composite image forming unit are processed as a data block with a header attached thereto. The data blocks and the operating conditions of each device of the composite image forming unit are managed according to a data allocation status block (management table).

A request to each device of the composite image forming unit designated by the computer user is generated on the memory of the computer as a control block by applications running on the computer. The computer attempts to establish a connection with the composite image forming unit according to the SCSI protocol, for example.

The external interface of the composite image forming unit, upon receipt of the request, establishes a connection corresponding to the SCSI protocol. Once the connection is established, the control block is written into the page memory of the composite image forming unit. As a result of an interrupt from the external interface, the CPU recognizes the presence of the control block, loads the control block from the page memory, and interprets and executes it. The time to start this execution is decided by the CPU in such a manner as not to interfere with the job being executed by the user operating the control panel of the composite image forming unit.

With the start of each device operation in the composite image forming unit, the management data (operating conditions) of each device in the data allocation status block is updated. Further, in the case of a new entry or deletion of a data block in the page memory, the management data (header) for such a data block is modified in the data allocation status block.

The computer connected with the composite image forming unit, on the other hand, reads the data allocation status block at predetermined time intervals and thus is always kept informed of the internal conditions of the composite image forming unit. Image data, which may be produced by the computer, are provisionally stored in the external memory of the computer in the same format as the data block. The computer adds the data block information stored in the external memory to the information in the data allocation status block read at predetermined time intervals. As a result, the user can process the data block and control the composite image forming unit with the same operation ignoring whether the data to be processed by the user resides in the external memory of the computer or in the page memory of the composite image forming unit.

As described above, the data blocks to be processed stored in the page memory of the composite image forming unit and the external memory of the computer are managed by the data allocation status block. Consequently, the copying operation for forming and outputting from the printer the image data of an original read by the scanner, for example, can be performed concurrently with the process of transmitting the image data produced by the computer by facsimile. In other words, the inconvenience experienced in the prior art when a given function fails to operate while another function is in operation among the scanner, the printer and the facsimile is obviated.

The computer controls the composite image forming unit while grasping the operating conditions of each device (scanner, printer and facsimile) and the data block stored in the page memory on the basis of the data allocation status block of the composite image forming unit. The user, therefore, can operate the composite image forming unit directly without any feeling of interference.

This invention can be more fully understood from the following detailed description when taken in conjunction with the accompanying drawings, in which:
FIG. 1 is a schematic diagram showing a general configuration of a composite image forming system according to an embodiment of the invention;
FIG. 2 is a diagram schematically showing a configuration of a scanner of the composite image forming unit;
FIG. 3 is a diagram schematically showing a configuration of a printer of the composite image forming unit;
FIG. 4 is a diagram schematically showing a configuration of a facsimile of the composite image forming unit;
FIG. 5 is a diagram schematically showing a configuration of an external interface;
FIG. 6 is a diagram for explaining a method of controlling the composite image forming unit from a computer connected through the external interface;
FIG. 7 is a diagram for explaining the foreground control and the background control;
FIG. 8 is a diagram for explaining a specific process of polling internal information;
FIG. 9 is a diagram showing an example of storing the control block on the page memory;
FIG. 10 is a diagram showing an example of storing the data block on the page memory;
FIG. 11 is a diagram showing an example of storing the data allocation status block on the page memory;
FIG. 12 is a diagram for explaining a method of managing the data block according to the data allocation status block;
FIG. 13 is a diagram for explaining the software architecture of the computer connected to the composite image forming unit; and
FIG. 14 is a flowchart showing the operation of the composite image forming unit which has received a device drive command from the computer.

An embodiment of the invention will be described below with reference to the accompanying drawings.

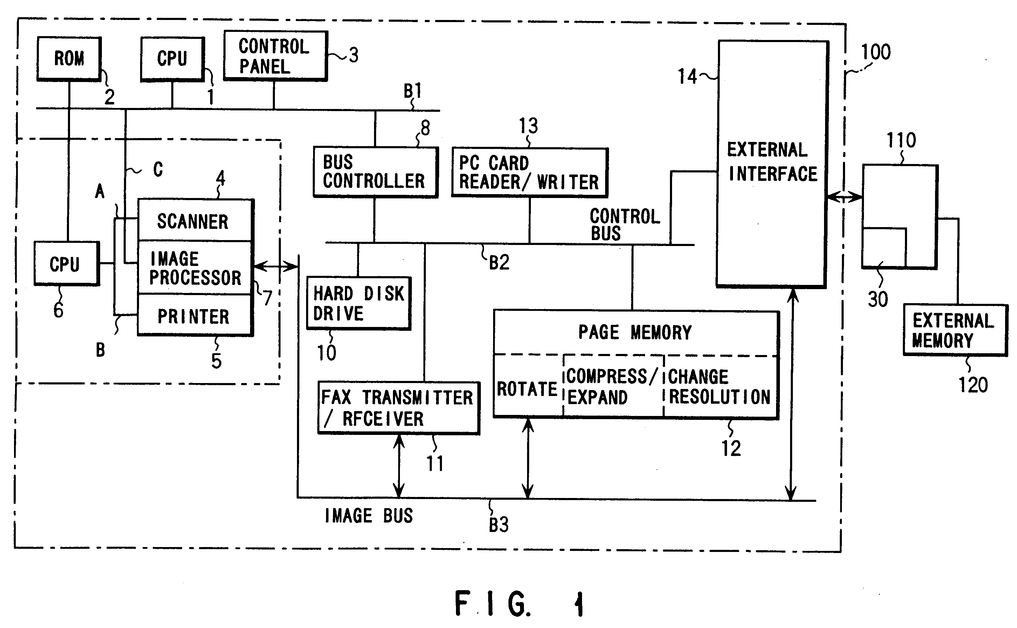

FIG. 1 shows a configuration of a composite image forming system comprising a composite image forming unit 100 having three functions of scanner, facsimile and printer, and a computer 110 connected through a predetermined communication cable.

The composite image forming unit 100 is connected through a control bus B1 with a CPU 1 responsible for overall control of the unit, a ROM 2 having a control program stored therein, a control panel 3, a CPU 6 for controlling a scanner 4 and a printer 5, an image processor 7 and a bus controller 8. Further, the bus controller 8 is connected through a control bus B2 to a hard disk drive 10, a facsimile transmitter/receiver (hereinafter referred to merely as the facsimile) 11, a page memory 12, a PC card reader/writer 13 and an external interface 14. The CPU 1 is adapted to control the hard disk drive 10, the facsimile 11, the page memory 12, the PC card reader 13 and the external interface 14 through the control bus B1, the bus controller 8 and the control bus B2. Also, the image processor 7, the facsimile 11, the page memory 12 and the external interface 14 are adapted to deliver and receive image data through an image bus B3.

The external interface 14 is connected to the computer 110 through a communication cable. The computer 110 is connected with an external memory unit 120 for storing image data.

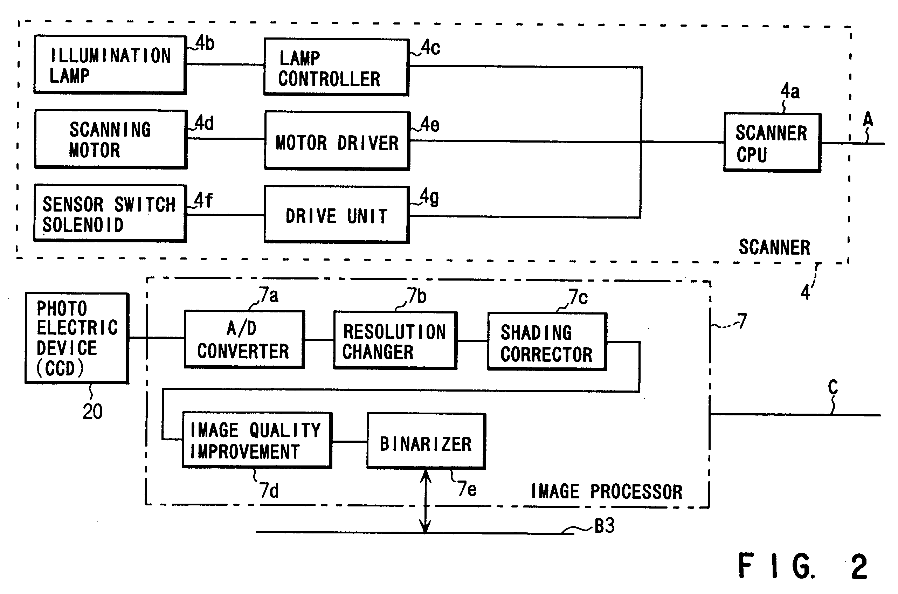

Now, a detailed configuration of the scanner 4 and the image processor 7 will be explained with reference to FIG. 2.

A scanner CPU 4a of the scanner 4 is connected to and controls a lamp controller 4c for controlling an illumination lamp 4b, a motor driver 4e for controlling a scanning motor 4d, and a drive unit 4g for controlling the drive of a sensor, a switch, a solenoid, etc. The scanner CPU 4a is also connected to and controls an A/D converter 7a, a resolution changer 7b, a shading corrector 7c, an image quality improver 7d and a binarizing circuit 7e for processing the image data from a photoelectric device 20 such as a CCD.

The image data read by the photoelectric device 20 is sent to and stored in the page memory 12 through the image processor 7 and the image bus B3.

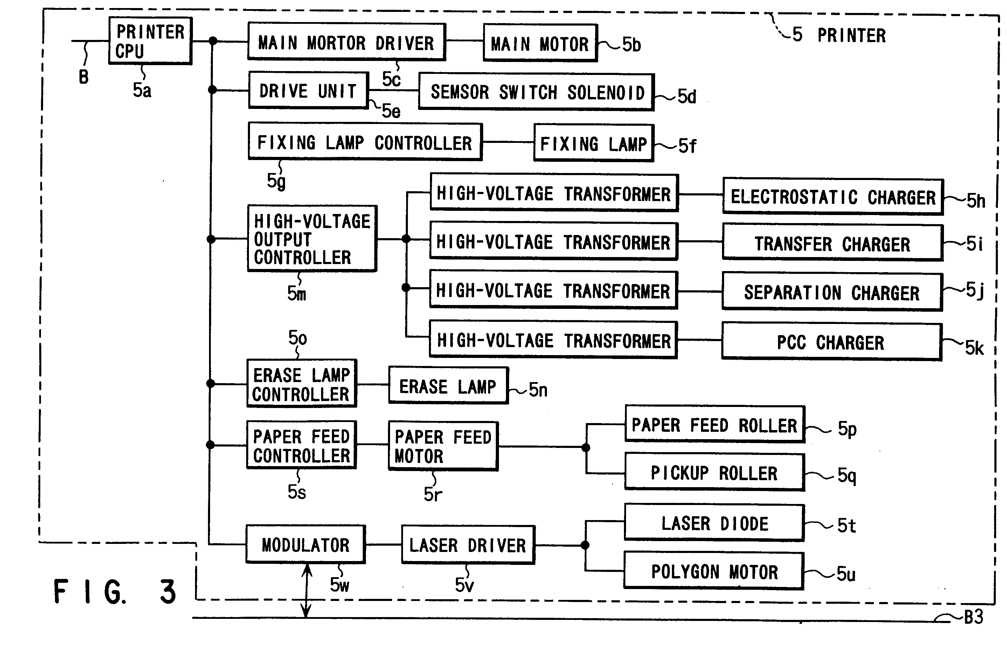

Now, a detailed configuration of the printer 5 will be explained with reference to FIG. 3.

A printer CPU 5a of the printer 5 is connected to and controls a main motor driver 5c for driving a main motor 5b, a drive unit 5e for driving and controlling a sensor, a switch, a solenoid 5d, etc., a fixing lamp controller 5g for controlling a fixing lamp 5f, a high-voltage output controller 5m for controlling an electrostatic charger 5h, a transfer charger 5i, a separation charger 5j and a PCC charger 5k, an erase lamp controller 5o for controlling an erase lamp 5n, a paper feed controller 5s for controlling a paper feed motor 5f for a paper feed roller 5p and a pickup roller 5q, and a modulator 5w for driving a laser drive circuit 5v for an electrooptic transducer (laser diode) 5t and a polygon motor 5u.

The image data sent from the page memory 12 through the image bus B3 is printed on a predetermined paper under the control of the printer CPU 5a of the printer 5 having this configuration.

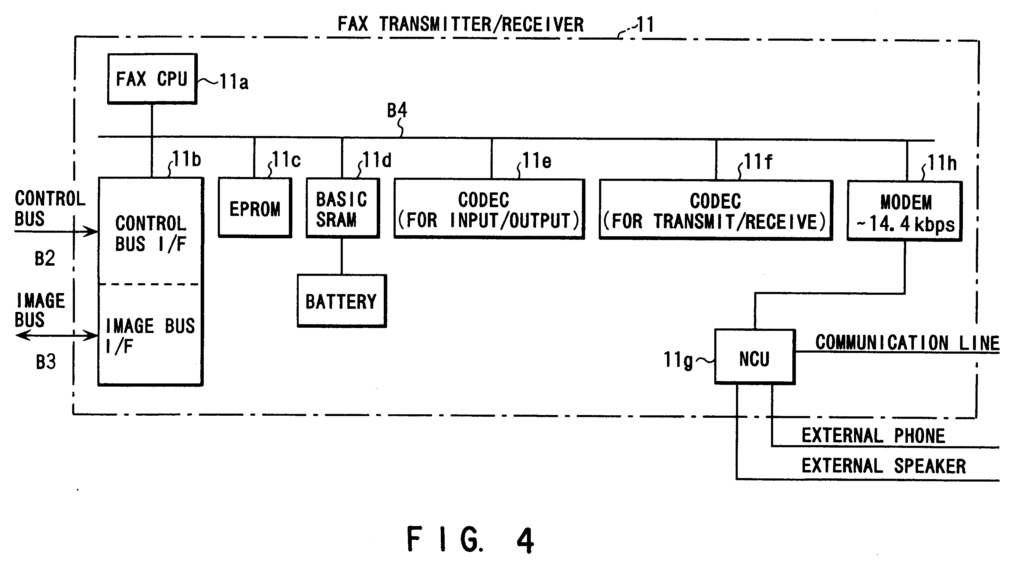

Now, a detailed configuration of the facsimile 11 will be explained with reference to FIG. 4.

A facsimile CPU 11a of the facimile 11 is connected through a bus B4 to and adapted to control an interface control circuit 11b including a control bus interface and an image bus interface, a memory (EPROM) 11c having a control program stored therein, a memory (SRAM) 11d having image stored therein, a CODEC 11e for compressing/expanding the image data for input and output, a CODEC 11f for compressing/expanding the image data for transmission and receipt, and a modem 11h for modulating/demodulating data for transmission and receipt through an NCU (network control unit) 11g for controlling a public communication network.

The facsimile 11 having this configuration compresses or performs other operations on the image data sent from the page memory 12 through the image bus B3 and outputs the resulting image data to the communication line. The facsimile 11 also expands or otherwise processes the image data received through the communication line, and transmits the resulting image data to the page memory 12 through the image bus B3.

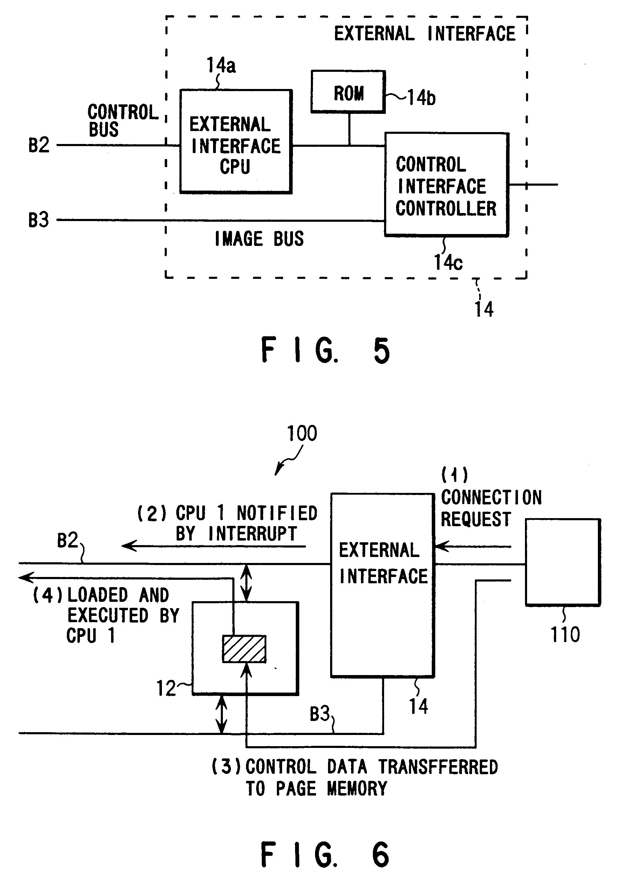

Now, a detailed configuration of the external interface 14 arranged in the composite image forming unit 100 will be explained with reference to FIG. 5. An external interface CPU 14a of the external interface 14 is connected to and adapted to control a ROM 14b having a control program stored therein and an interface controller 14c. Also, the external interface CPU 14a exchanges the communication interface control information through the control buses B1 and B2. Further, an interface controller 14c is connected through the image bus B3 to the page memory 12. The data sent to the external interface 14 from an external source is stored in the page memory 12 through the image bus B3. Also, the image data stored in the page memory 12 is output externally through the image bus B3 and the external interface 14.

The external interface CPU 14a reads the control program from the ROM 14b and controls the external interface 14. As a result, the CPU 1 of the composite image forming unit 100 never participates directly in the communication control of the external interface 14. The communication control is always performed by the CPU 14a of the external interface 14. The external interface 14 operates in response to a data transmit/receive request from the computer 110. The CPU 14a controls the data input/output for the interface controller 14c from/to the image bus B3, and thus establishes a data transfer path to the page memory 12.

The external interface 14 is connected to the computer 110 through a predetermined communication cable and transfers data on the basis of the SCSI (small computer system interface), for example.

In the case where the SCSI is adopted for the external interface 14 of the composite image forming unit 100, the external interface 14 has the function of controlling the phases specified by the SCSI, including the arbitration phase, selection phase, message phase, command phase, data phase, status phase and reselection phase.

A data transmit/receive request is always issued to the composite image forming unit 100 from the computer 110. The computer 110, therefore, operates as what the SCSI called the initiator. The composite image forming unit 100 is designated as the destination of communication from the initiator, and therefore always operates as a target.

In view of the fact that the SCSI lacks the category of "image forming unit" as a device to be controlled, the external interface 14 is regarded to belong to the category of processor device for the interface operation.

As described above, the composite image forming unit 100 and the computer 110 are interconnected in a communicable fashion, so that data are exchanged between the composite image forming unit 100 and the computer 110. According to this embodiment, the SCSI ID is set only for the composite image forming unit. Further, the category of processor device specified by the SCSI has an SCSI command shared by the devices belonging to the same category. The SCSI allows the vendor (manufacturer) to use an SCSI command defined by the vendor on its own. In the case where the SCSI is applied to the external interface 14 and in the case where it is difficult to control the external interface by a common command, therefore, the external interface 14 is controlled by use of vendor-defined SCSI commands.

The vendor-defined SCSI commands, as described later, include a command for reading the data allocation status block, a command for reading the data block, a command for writing the data block and a command for writing the control block. When any of this command is received by the external interface 14 of the composite image forming unit 100, an interrupt occurs and the CPU 1 is notified that the command has been received. The CPU 1 interprets the command and is readies itself for the operation in response to the command. Incidentally, in the composite image forming unit according to the invention, the control interface between the external interface 14 and the computer 110 is not confined to the SCSI.

Now, a method of controlling the composite image forming unit 100 from the computer 110 connected through the external interface 14 will be explained with reference to FIG. 6.

The scanner 4, the facsimile 11 and the page memory 12 constituting the internal devices of the composite image forming unit 100 are virtually controlled by the CPU 1 of the composite image forming unit 100. In the case where the computer 110 drives the internal devices of the composite image forming unit 100, therefore, an instruction data string from the computer 110 to the CPU 1 is transferred to the page memory 12, and loaded by the CPU 1 from the page memory 12. The CPU 1 then interprets and executes the instructions thereby to drive the devices in the composite image forming unit. The steps of this process will be described below.
Step 1: The computer 110 issues a connection request to the composite image forming unit 100.
Step 2: The external interface 14 that has received a connection request notifies the CPU 1, by way of an interrupt, that a connection request has been received from the computer 110.
Step 3: Once the connection with the composite image forming unit 100 is established through the external interface 14, the computer 110 transfers to the page memory 12 the instruction data required for the CPU 1 to drive the appropriate device in the composite image forming unit 100.
Step 4: The CPU 1 loads and executes the instruction data on the page memory 12.

The above-mentioned steps makes it possible for the computer 110 to control the internal devices of the composite image forming unit 100.

In the case where the SCSI is used for the external interface 14, on the other hand, the instruction to the CPU 1 of the composite image forming unit 100 is transferred as a data string to the page memory 12 in data phase. In other words, when the SCSI is used, the image data and the control data are not discriminated from each other but both are handled simply as data by the SCSI. The external interface 14 decides whether the succeeding data in data phase is image data or control data by means of the SCSI command transferred thereto from the computer 110 in command phase of the SCSI. Upon successful discrimination whether the data transferred in data phase is image data or control data, the external interface 14 generates an interrupt and notifies the CPU 1. The external interface 14 transfers the control data to the page memory and controls the SCSI phases, thus completing the transfer. After that, the CPU 1 loads the control data on the page memory 12 and drives the appropriate device in the composite image forming unit.

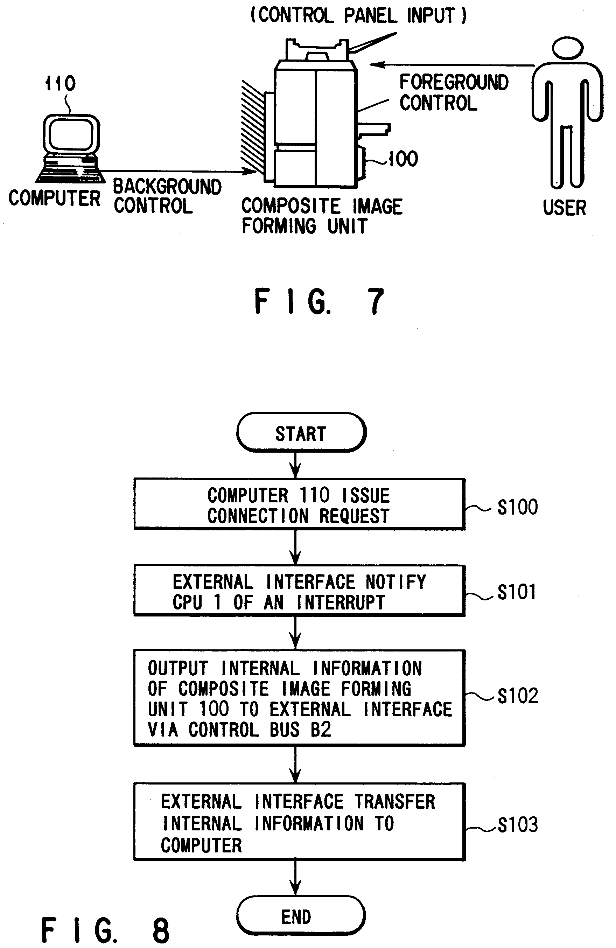

FIG. 7 is a diagram for explaining the manner in which the system according to the invention is controlled. As shown in FIG. 7, the system according to the invention can be controlled either by the user operating the control panel 3 and issuing a command for the desired process to the composite image forming unit 100 (foreground control) or by the computer 110 connected to the composite image forming unit 100 (background control).

One of the features of the composite image forming system according to this embodiment is that the foreground control is not interfered by the background control. If the computer 110 performs the background control on the composite image forming unit 100 during the foreground control of the composite image forming unit 100 by the user, the foreground control is not affected by the background control. This means that the foreground control has a priority over the background control, and is intended to keep the user in the feeling of directly manipulating the composite image forming unit 100.

In the composite image forming unit 100, the concurrent operation of the scanner 4, the printer 5 and the facsimile 11 is guaranteed. Even when a device in the composite image forming unit is driven under the foreground control, therefore, another device not driven in the composite image forming unit 100 can be driven under the background control.

Also, a device currently driven under the foreground control in the composite image forming unit can be operated under the background control. In this case, since the particular device is operating under the foreground control, the background control is kept a waiting mode until the same device is released according to the non-interference rule. The control data thus is held on the page memory 12 of the composite image forming unit 100. When the device is released, the CPU 1 loads the control data and starts driving the device.

Now, explanation will be made about the polling of the internal information (status) of the composite image forming unit 100 as a function for the background control from the computer 110. The computer 110 polls the composite image forming unit 100 at predetermined time intervals or at the time of starting the background control of a device in the composite image forming unit 100. The polling of internal information, by which any mechanism in the composite image forming unit 100 is not driven, can be performed at an arbitrary timing. Even when a device is operating in the composite image forming unit 100, the internal information can be polled substantially in parallel with the operation of the particular device.

The above-mentioned method of controlling the composite image forming unit 100 by the computer PC is somewhat different as far as the polling of internal information is concerned. Usually, the background control is performed by transferring the control data from the computer 110 onto the page memory 12, which control data is loaded by the CPU 1. The internal information polling, however, constitutes a command output from the computer 110 to the external interface 14, which notifies the CPU 1, by a specific interrupt, that an output request for internal information has arrived. In the case where the SCSI is used, for example, this internal information output request constitutes a command transferred from the initiator to the target in command phase.

A specific processing operation on the internal information polling will be explained with reference to the flowchart of FIG. 8.

The external interface 14, upon receipt of an internal information polling command (step S100), notifies the CPU 1, by use of an interrupt, that a request has been received for outputting internal information of the composite image forming unit 100 (step S101).

The CPU 1 reads from a table described later the internal information of the composite image forming unit 100 as of the time of interrupt and outputs it to the external interface 14 (step S102). The external interface 14 transfers the internal information to the computer 110 in data phase (step S103).

As a result, the computer 110 can acquire the internal information on the composite image forming unit 100, i.e., the presence or absence of the foreground control, the presence or absence of a facsimile message or the presence or absence of the background control.

Now, the structure of data handled by the composite image forming system according to this embodiment will be explained. According to this embodiment, the composite image forming unit 100, which may be used independently, can also be controlled by the computer 110 connected to the interface of SCSI or the like. The data exchanged between the composite image forming unit 100 and the computer 110, therefore, are configured of three control blocks called a control block (corresponding to the above-mentioned control data), a data block and a data allocation status block.

In the case where the computer 110 and the composite image forming unit 100 are connected with each other by means of the SCSI or the like interface, the control block transferred from the computer 110 to the composite image forming unit 100, i.e., the instruction to the CPU 1 of the composite image forming unit 100, is transferred simply as data onto the page memory 12 of the composite image forming unit 100. This data is not discriminated from the image data in the interface between the computer 110 and the composite image forming unit 100, and the interface handles both data simply as ordinary data.

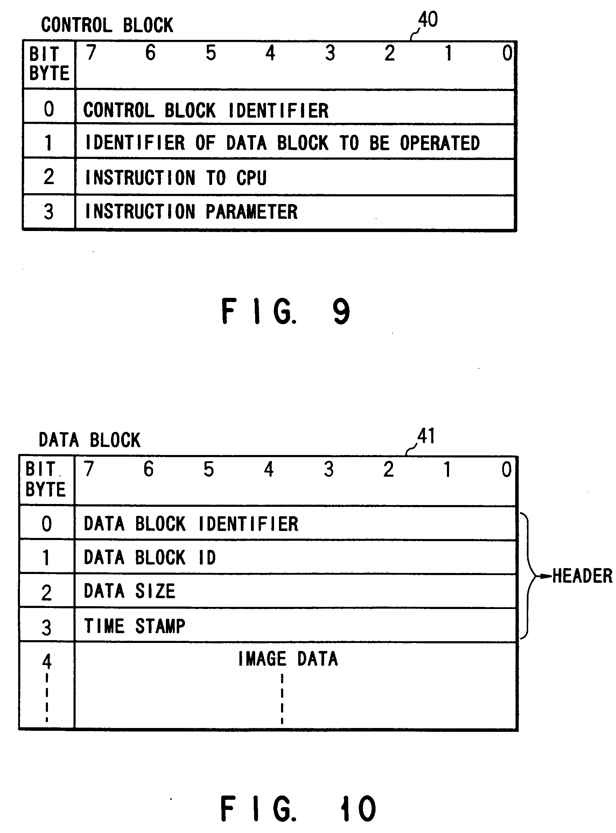

The control block 40, as shown in FIG. 9, for example, consists of:
- Control block identifier (ID) indicating this block is a control block.
- ID for the data block to be operated
- Instruction to CPU 1 (job type)
- Parameter and option of the instruction
- Telephone number of the facsimile receiver

The background control of the composite image forming unit 100 by the computer 110 is executed only after the control block transferred onto the page memory is loaded by the CPU 1. In the case where the control block is transferred from the computer 110 to the page memory 12 while a device (scanner 4, printer 5 or facsimile 11) is operating in the composite image forming unit 100 under the foreground control and in the case where the particular block is data for controlling the device operating under the foreground, then the CPU 1 enters a waiting mode without immediately executing the control block. When the device is released upon termination of the foreground control, the CPU 1 loads the control block on the page memory 12 and executes the background control.

The data block is composed of image data with a management header added thereto. All the image data stored on the page memory 12 reside in this format. The data block 41, as shown in FIG. 10, for example, is configured of:
- Data block identifier(ID) indicating this block is a data block
- Data block ID for specifying the data block
- Data size
- Time stamp (specifying date and time of job generation)
- Image data

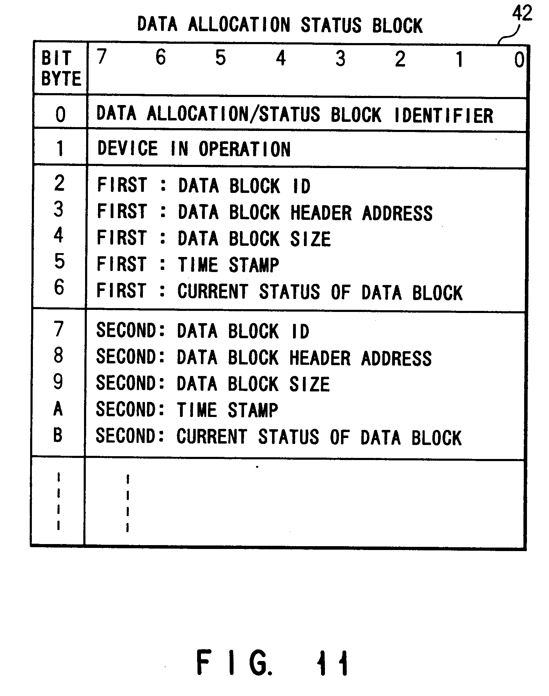

The data allocation status block is a table for managing the individual data blocks residing on the page memory 12. This block makes it possible to check the driven state of the scanner 4, the printer 5 and the facsimile 11. The data allocation status block 42, as shown in FIG. 11, for example, is configured of:
- Identifier (ID) indicating that this block is a data allocation status block
- Information on the device in operation (scanner 4, printer 5 or facsimile 11)
- Flag indicating whether the system is under the foreground control is or not
- Information (address) on the position of each data block on the page memory 12
- Size of each data block
- Date and time each data block is held on the page memory
- Current status of each data block (Information about execution of a process designated. Specified by such wordings as "the image data read by the scanner 4 for which the printer 5 is waiting", "the image data received by the facsimile 11 for which the printer is waiting to print", "the data for which the facsimile 11 is waiting to transmit", etc.

The computer 110 receives the data allocation status block from the composite image forming unit 100 through an interface like the SCSI at a predetermined timing or immediately before transferring the control block for background control to the page memory 12. The internal conditions of the composite image forming unit can thus be recognized.

Also, The occupancy state of the page memory 12 in the composite image forming unit can be checked from the computer 110. The time the page memory 12 is occupied can be shortened and thus the operating efficiency of the page memory 12 is improved by printing out the data on the page memory 12, which may be received by facsimile, or by withdrawing such data temporarily into the external memory of the computer 110 under the background control.

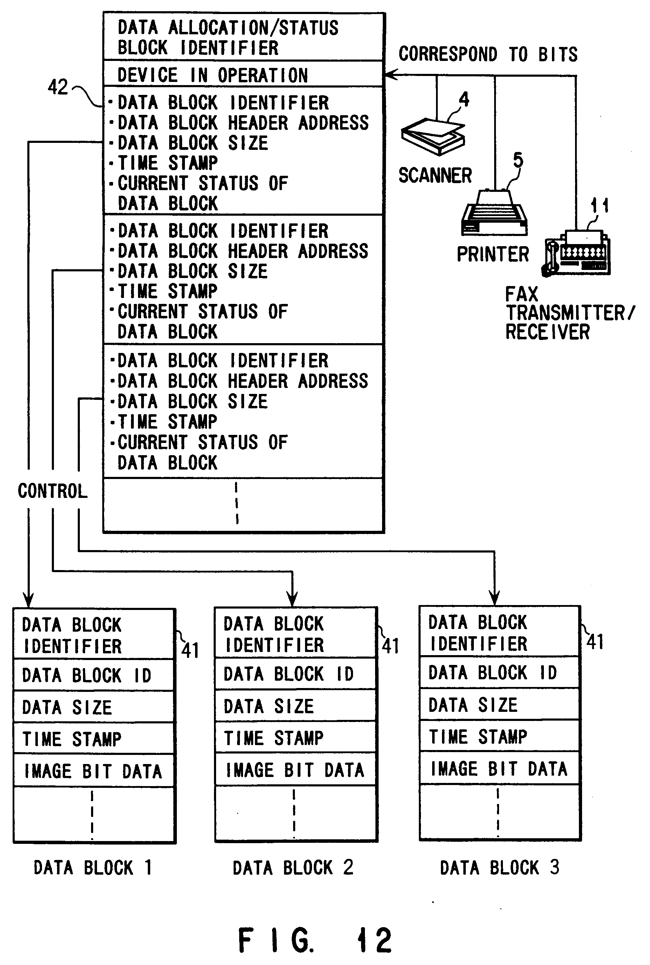

Specifically, the composite image forming unit 100 manages the data block 41 and the data allocation status block 42 of FIGS. 10 and 11 in the manner as shown in FIG. 12. In other words, only one data allocation status block 42 as shown in FIG. 11 resides on the page memory 12.

Further, in the case where the data block 41 on the page memory 12 undergoes a change or in the case where the operating condition undergoes a change of the scanner 4, the printer 5 or the facsimile 11 in the composite image forming unit 100, then the CPU 1 immediately updates by overwriting the data allocation status block 42.

In this way, the data to be processed residing on the page memory 12 of the composite image forming unit 100 are managed by the data block 41 and the data allocation status block 42, so that the CPU 1 can grasp all the data on the page memory 12 as well as the operating conditions at a given time point of the scanner 4, the printer 5 and the facsimile 11.

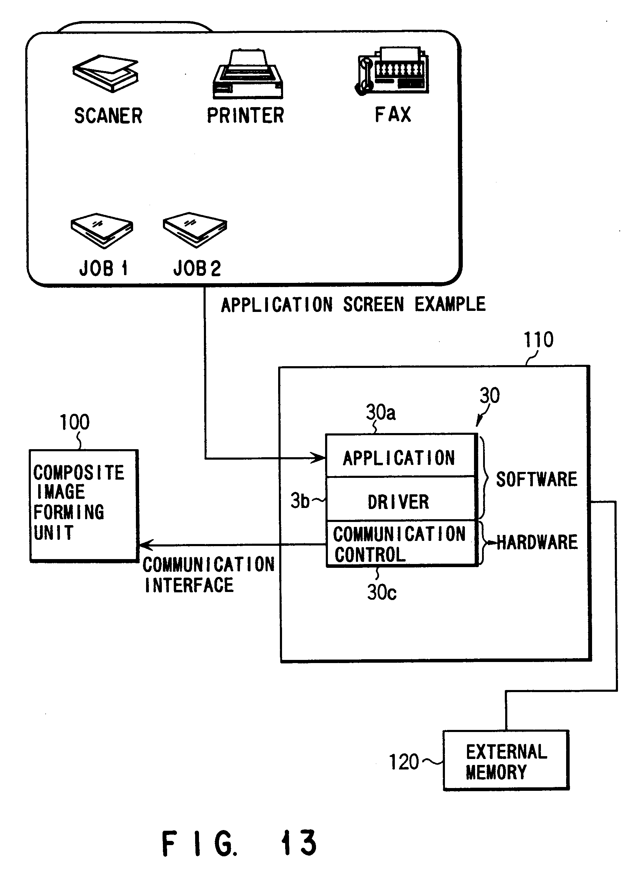

Now, a composite image forming process controller 30 incorporated in the computer 110 for controlling the composite image forming unit 100 from the computer 110 will be described with reference to FIG. 13. According to this embodiment, the composite image forming unit 100 and the computer 110 are assumed to be connected with each other through the SCSI. The external interface 14 of the composite image forming unit 100, by the device categorization according to the SCSI, is defined as a processor device and assigned one SCSI ID. Under this condition, the computer 110 recognizes the composite image forming unit 100 only as an SCSI device.

According to this embodiment, the computer 110 and the composite image forming unit 100 are so correlated that the computer 110 always issues an SCSI connection request. The computer 110 thus operates as an initiator according to the SCSI, while the composite image forming unit 100 always acts as a target according to the SCSI.

The software architecture of the composite image forming process controller 30 of the computer 110 connected to the composite image forming unit 100 is configured in two layers as shown in FIG. 13, which will be called an application 30a and a driver 30b, respectively.

In the case where a device in the composite image forming unit 100 represented by an icon on the screen is selected by the user operating a pointing device such as a mouse according to the application 30a as shown in FIG. 13, for example, the control block 40 for the selected device is generated on the main memory of the computer 110. This generation of the control block is called the occurrence of an event. Then, the application notifies the driver 30b of the event occurrence. The driver 30 notified of the event occurrence controls the data transfer on the basis of the SCSI, and transfers the control block to the page memory 12 of the composite image forming unit 100. The block block 40 thus transferred is loaded on the CPU 1 and executed in accordance with the non-interference rule prohibiting the background control from interfering with the foreground control.

Also, the application 30a holds the image data generated on the computer 110 in the external memory 120 of the computer 110 in the data block format of FIG. 11. The computer 110 is supplied with the data allocation status block 42 from the composite image forming unit 100 at predetermined time intervals. The application 30a adds the management information (header) of the data block held in the external memory 120 to the data allocation status block 42. As a consequence, the user operating the application can manage the data block to be processed similarly irrespective of whether it is stored in the page memory 12 of the composite image forming unit 100 or in the external memory of the computer 110. In other words, the application abstracts the location of the data block. The user thus can manipulate the data block 41 as an abstract image in the form of an icon by the application 30a.

In the case where a print event or a facsimile transmission event occurs, the data block 41 to be processed first is transferred onto the page memory 12 of the composite image forming unit 100. Then, the control block is transferred onto the page memory 12, and the CPU 1 loads and executes the particular control block.

Now, explanation will be made about the control performed on the scanner 4 of the composite image forming unit 100.

The user selects the composite image forming unit 100 to be used as a scanner by way of the control panel 3. This operation is handled as the foreground control, and therefore the CPU 1 of the composite image forming unit 100 drives the scanner 3 thereby to read a predetermined original.

Immediately after the scanner 4 is driven under the foreground control, the CPU 1 causes the data allocation status block 42 to reflect the driven state. Further, the image data of the original read by the scanner 4 is held in the format of the data block 41 on the page memory 12. In this case, too, the CPU 1 updates the data allocation status block 42 since a new data block 41 is stored on the page memory 12.

The application 30a of the composite image forming process controller 30 of the computer 110 connected to the composite image forming unit 100 according to the SCSI, on the other hand, establishes the SCSI connection at predetermined time intervals in order to acquire the data allocation status block of the composite image forming unit 100. For this purpose, a transfer command for the data allocation status block 42 is issued to the external interface 14 in command phase. Although the composite image forming unit 100 is defined as a processor device according to this embodiment, the application actually issues a command unique to the vendor since the control block is transferred onto the page memory 12.

The external interface 14 that has received the command generates an interrupt with the CPU 1 and notifies the latter that a connection request has been received from the computer 110. The CPU 1 then transfers the data allocation status block 42 to the external interface 14, which in turn transfers the block 42 to the computer 110 that is the initiator according to the SCSI.

The application 30a of the composite image processor on the computer 110 that has received the internal information of the composite image forming unit 100 recognizes that the image data read by the scanner of the composite image forming unit 100 resides on the page memory 12. The application then displays on a display unit the presence of the data read by the scanner.

The user who has visually confirmed this fact either prints out the image data involved by driving the printer 5 under the background control, or transfers the image data to the external memory 120 of the computer 110, or transmits the image data by driving the facsimile 11.

The same can be said of the receiving operation of the facsimile as that of the scanner. The image data received by the facsimile 11 through a communication line is held on the page memory 12 in the format of the data block 41. The computer 110 then recognizes the presence of the image data received by facsimile on the page memory 12 by the same technique as in the above-mentioned case. The resulting fact is displayed on a display unit of the computer 110. The print-out, the transfer to the external memory of the computer 110 or the facsimile transmission of the image data can be selected under the background control.

Now, explanation will be made about the case in which the image data (data block) stored on the page memory 12 of the composite image forming unit 100 is transferred to the computer 110.

In the case where the composite image forming unit 100 is used as a scanner and the image data read is held on the page memory 12 or in the case where a facsimile message is received and the received image data is held on the page memory, then the computer 110 recognizes the presence of the image data on the page memory 12 according to the above-mentioned technique.

The transfer event is generated by the application issuing a command to transfer the data block of the image data held on the page memory 12 under the background control.

In response to the occurrence of the transfer event, the control block 40 is generated on the main memory of the computer 11 and is transferred onto the page memory 12. The control block 40 contains an instruction issued to the CPU 1 to transfer the data block 41 of interest on the page memory 12 to the computer 110.

The CPU 1 loads the control block 40 from the page memory 12, and starts to transfer the data block 41 from the page memory 12 to the external memory 120 of the computer 110 according to the instruction described.

The transfer of the data block 41 to the external memory 120 of the computer 110 under the background control does not include the driving of a device in the composite image forming unit 100, and therefore can be executed at an arbitrary time like the transfer of the internal information of the composite image forming unit 10. Also, the image data handled in the computer 110 are all held in the external memory 120 in the format of the data block 41.

Now, explanation will be about the case in which the composite image forming unit 100 is used as a printer. In this case, the background control is somewhat different depending on whether the output data block 41 resides on the page memory 12 or on the external memory 120 of the computer 110. The application 30a of the composite image processor is configured, however, in such a manner as to absorb the difference so that the user of the computer 110 who attempts at the background control is not required to distinguish between the above-mentioned two cases.

The application 30a of the composite image processor displays a plurality of data blocks on a display or a similar unit hiding the location of the data blocks. In the process, it is no business of the user attempting at the background control of the printer whether the data block of interest resides in the external memory of the computer 110 or in the page memory 12. The user simply selects the data block 41 displayed by the application 30a and generates a print event.

Assume that the user selects the data block 41 on the page memory 12 of the composite image forming unit 100. The application 30a, immediately after the occurrence of a print event, generates the control block 40 containing an instruction of the CPU 1 for driving the printer 5 in the main memory of the computer 110. The application 30a then notifies the driver 30b. The driver 30b thus notified performs the phase control of the SCSI, establishes the connection with the composite image forming unit 100 and transfers the control block 40 to the page memory 12.

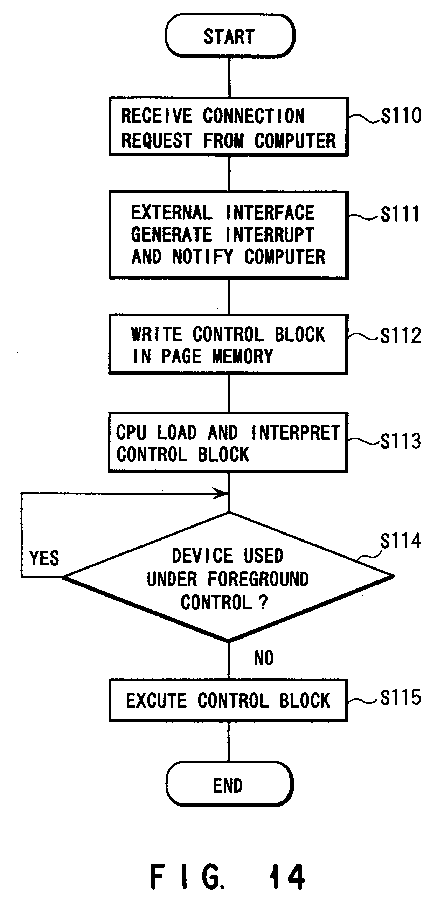

FIG. 14 is a flowchart showing the operation of the composite image forming unit 100 that received a device driving command from the computer 110. Upon receipt of a connection request from the computer 110 (step S110), the external interface 14 generates an interrupt, and transmits the connection request to the CPU 1 (step S11). The control block from the computer 110 is written in the page memory 12 (step S112), and the CPU 1 loads and interprets the control block (step S113). If the printer 5 is in use under the foreground control, the CPU 1 waits for the end of the operation of the printer 5 (step S114). As soon as the printer 5 is released, the CPU 1 executes the control block 40 (step S115), that is, performs the printing operation by driving the printer 5. In this way, the foreground control under which the composite image forming unit 100 is operated directly by the user always has priority over the foreground control by the computer 110.

Assume that the data block 41 of interest resides on the external memory 120 of the computer 110. When a print event occurs, the application 30a of the composite image processor 30 first transfers the data block of interest on the external memory 30a to the page memory 12. After that, the control block 41 containing an instruction of the CPU 1 to drive the printer 5 is transferred to the page memory 12. The CPU 1 thus loads and executes the control block 41.

Now, the facsimile transmission will be explained. The operation is substantially the same when the composite image forming unit 100 is used as a facsimile to transmit an image as when it is used as a printer. The data block 41 of the image data constituting a facsimile original may be either on the page memory 12 or on the computer 110 with equal effect, which is transparent to the user performing the background control.

It will thus be understood from the foregoing description that according to the present invention, a composite image forming system is provided which guarantees the concurrent operation of the functions of a composite image forming unit without adversely affecting the user feeling of operation while at the same time permitting remote operation from the computer connected with the composite image forming unit.

## Claims

1. A composite image forming system comprising:
an image forming unit (100) including a plurality of devices having means (4) for reading an original image to output an image data, means (12) for storing the image data output from the read means (4) and means (5) for forming an image on the basis of the image data;
a external unit (110);
means (30), connected to said image forming unit (100) and said external unit (110), for transmitting a second image data and a control command signal from said external unit (110) to said image forming unit (100), the control command signal including a signal for representing that the second image data is from the external unit; and
control means (CPU 1) for causing the second image data to be stored in said storing means (12) and controlling, on the basis of the control command signal, a priority of the image forming operation for each of the image data received from said reading means (4) and the second image data stored in said storing means (12).

2. A system according to claim 1, characterized in that said devices include a facsimile transmission/receiving means (11).

3. A system according to claim 1, characterized in that said image forming unit (100) includes a management table (42) for managing the current operating conditions of said devices and means (114) for suspending the execution of the control command in the case where the control command signal (40) is received from the external unit and the management table (42) indicates that the device required for execution of the control command is in use.

4. A system according to claim 1, characterized in that
said image forming unit includes a management table (42) for managing the current operating conditions of said devices and means for driving first and second devices concurrently upon receipt of an instruction from said external unit (110) to drive the second device with the management table (42) indicating that the first device is in operation.

5. A system according to claim 1, characterized in that
said image data is processed as a data block (41) with a header added thereto, and
said image forming unit (100) includes a management table (42) for managing a plurality of data blocks and the current operating conditions of said devices.

6. A system according to claim 5, characterized in that
said data blocks (41) are managed by the header of each data block in said management table (42).

7. A system according to claim 5, characterized in that
said external unit includes means for receiving the management table (42) and recognizing the conditions of each device in said image forming unit (100).

8. A system according to claim 5, characterized in that
said external unit (100) includes;
means (120) for holding the image data produced by said external unit in the format of said data block, and
means supplied with said management table (42) from said image forming unit (100) for adding the management data relating to the data block (41) held in said holding means (120) to said management table (42) and managing both the data block (41) stored in the memory means (12) of said image forming unit (100) and the data block (41) stored in the holding means (120) of said external unit (110).

9. In a composite image forming system comprising a external unit (110) and an image forming unit (100) including a plurality of devices having read means (4) for reading an original image and outputting image data, memory means (12) for storing the image data output from the read means (4), and image forming means for forming an image on the basis of the image data, a method for controlling said image forming unit comprising the steps of:
connecting said image forming unit (100) and said external unit (110);
transmitting the image data and a control command signal from said external unit (110) to said image forming unit (100);
storing the transmitted image data in said memory means (12) and controlling the priority of the image forming operation based on the image data received from the read means (4) and the external unit (110) and stored in said memory unit (12).

10. An image forming apparatus, comprising;
means for reading an original image to generate a first image data;
means for receiving a second image data and a control command signal provided from an external unit;
means for storing the first image data, the second image data, and the control command signal, the control command signal including a signal for representing that the second image data is from the external device;
means for forming an image on the basis of one of the first image data and the second image data; and
means for controlling a start timing of the image forming operation of the image forming means for each of the first image data and the second image data, on the basis of the control command signal.

11. An apparatus according to claim 10, further comprising a management table for managing the current operating conditions of said reading means and said image forming means, and means for suspending the execution of the control command in the case where the control command signal is received from the external unit and the management table indicates that the means required for execution of the control command is in use.

12. An apparatus according to claim 1, further comprising
a management table for managing the current operating conditions of said reading means and said image forming means, and means for driving said reading means and said image forming means concurrently upon receipt of an instruction from said external unit to drive one of said reading means and image forming means, with the management table indicating that the other of said reading means and image forming means is in operation.
